(19) Europäisches Patentamt
European Patent Office
Office européen des brevets

(11) **EP 3 982 013 A1**

(12) **EUROPEAN PATENT APPLICATION**

(43) Date of publication:
**13.04.2022 Bulletin 2022/15**

(51) International Patent Classification (IPC):
*F16H 63/32* (2006.01)   *B21D 5/01* (2006.01)
*F02M 61/14* (2006.01)

(21) Application number: **20200802.5**

(22) Date of filing: **08.10.2020**

(52) Cooperative Patent Classification (CPC):
**F16H 63/32; B21D 5/01; B21D 53/36; B21D 53/88;
F02M 61/14; F02M 61/168;** F16H 2063/327

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **A.G. Porta S.p.A.
10024 Moncalieri (Torino) (IT)**

(72) Inventor: **PORTA, Fabrizio
I-10133 TORINO (IT)**

(74) Representative: **Fioravanti, Corrado et al
Jacobacci & Partners S.p.A.
Corso Emilia 8
10152 Torino (IT)**

(54) **A METHOD OF MANUFACTURING METAL COMPONENTS FROM A SINGLE PIECE OF SHEET METAL**

(57) For manufacturing metal components, at least one operation of bending a sheet metal piece is carried out by urging the sheet metal piece against a die (50) with a punch (52). The working surface (54c) of the die has a radius of curvature (rM) greater than the radius of curvature (rl) of the theoretical extrados surface (SE) of the bent portion (P) to be obtained. The radius of curvature (rM) of the working surface (54c) of the die is calculated from the radius of curvature (rE) of the theoretical extrados surface (SE) of the bent portion (P) to be obtained taking into account a correction factor (k) dependent on the tensile strength of the material of the sheet metal piece, on the bending angle ($\alpha$) of the bent portion (P) to be obtained and on the thickness (s) of the sheet metal piece.

**FIG.6**

## Description

Technical field

The present invention relates to a method for manufacturing metal components from a single sheet metal piece.

The invention has been conceived in particular for manufacturing components for motor vehicles, such as for example forks for gearboxes or mounting brackets for injectors of internal combustion engines, but it is naturally applicable to the production of any other metal component which may be obtained from a sheet metal piece.

Prior art

Fig. 1 of the accompanying drawings, taken from European patent EP 2 053 283 B1, shows a known example of a fork for a gearbox to which a method according to the invention is applicable. With reference to this figure, the fork is indicated as a whole with 10 and substantially comprises a body 14 adapted to support the fork in a sliding manner along a stationary guide rod (not shown) of the gearbox, a pair of prongs 16 fixed to the body 14 and an actuation nose 18 fixed to the body 14. More specifically, according to this known embodiment, the body 14 has a general U-shaped configuration, with a central plate 20 and a pair of mounting plates 22a, 22b which extend from the opposite longitudinal ends of the central plate 20, at a right angle relative thereto. The mounting plates 22a, 22b have respective guide through holes 24, coaxial to each other, to guide the fork 10 along the axis of the respective guide rod.

The body 14, the prongs 16 and the actuation nose 18 are made by shearing and bending operations using separate pieces of sheet metal (preferably a single piece of sheet metal for both prongs 16) and are fixed to each other by welding. However, such a manufacturing method is rather onerous, as it provides for the production of separate parts of the fork (but the same is true for any other component to be obtained) and thus the fixing of these parts to each other by welding.

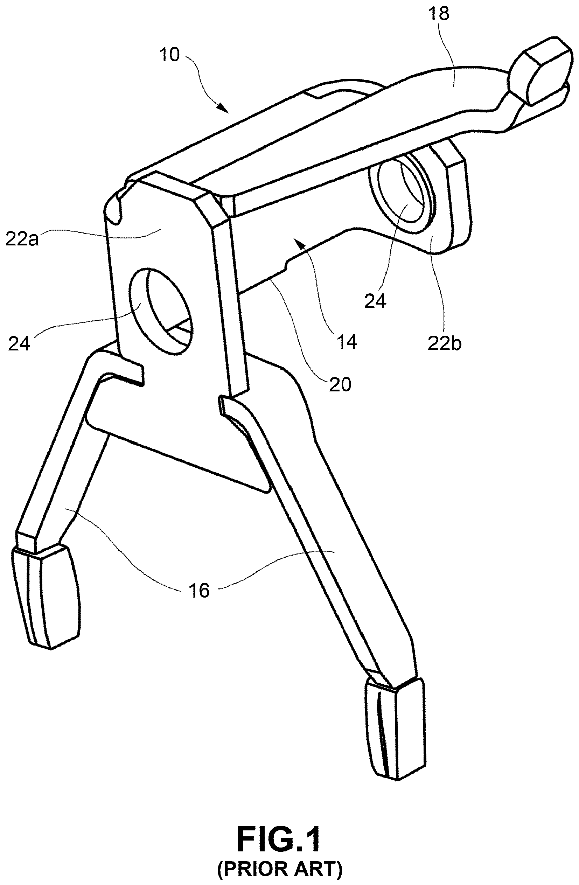

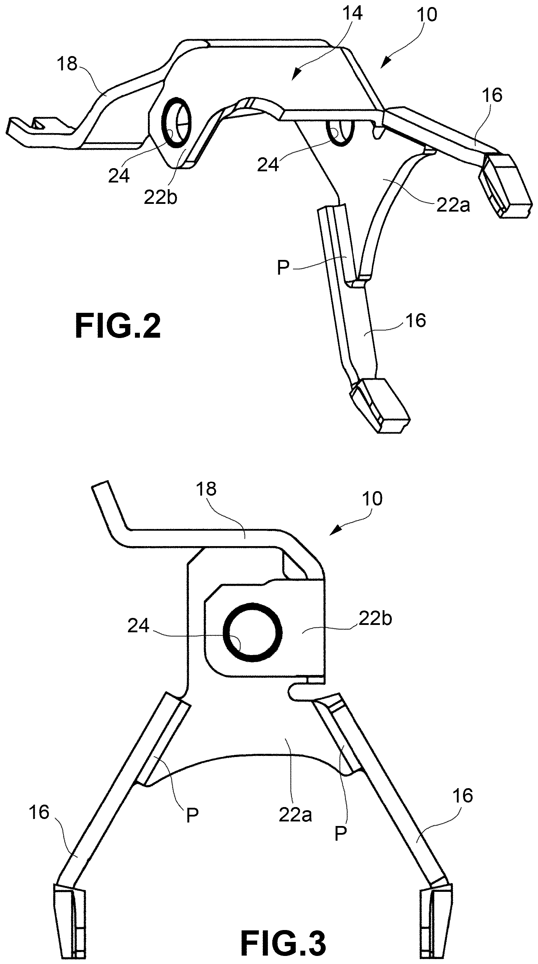

It would be preferable to manufacture a fork of this type from a single piece of sheet metal, without therefore having to resort to welding operations for fixing separate parts of the fork to each other. In this regard, Fig. 2 and 3 of the accompanying drawings, wherein the same reference numbers have been attributed to parts and elements identical or corresponding to those of Fig. 1, show a fork 10 for a gearbox having a geometry similar to that of the fork of Fig. 1, but made as a single body from a single piece of sheet metal. In the fork of Fig. 2 and 3, for example, the two prongs 16 are integrally connected to the mounting plate 22a by means of respective bends, or bent portions, indicated with P, in this case right-angle bends. These bends are unobtainable with the bending techniques known to date, especially in the case of components, such as the forks for gearboxes or the brackets for injectors of internal combustion engines, obtained from metal sheet with a thickness of a few millimeters, if not with significant problems of geometric and dimensional precision, which make further machining on the component necessary to comply with the required tolerances and therefore make the manufacturing process more complex and expensive overall. Furthermore, obtaining these bends with the bending techniques known to date would entail a reduction in the mechanical characteristics of the material and an increase in the stresses on said material, with a consequent risk of cracking. For these reasons, a fork for a gearbox such as the one shown in Fig. 1 has never before been manufactured from a single sheet metal piece.

Summary of the invention

The object of this invention is therefore to provide a method which allows metal components to be manufactured, in particular components for motor vehicles, such as forks for gearboxes or mounting brackets for injectors of internal combustion engines, from a single piece of sheet metal by means of at least one bending operation, ensuring high dimensional accuracy, counteracting the springback of the material after bending and reducing the stresses on the material during bending.

This and other objects are fully achieved according to the invention by a method comprising the steps defined in the appended independent claim 1. Advantageous embodiments of the method according to the invention are specified in the dependent claims, the content of which is to be understood as an integral part of the description that follows.

In short, the invention is based on the idea of carrying out the bending operation (or operations) necessary for manufacturing the component by urging the sheet metal piece against a die with a punch,

wherein the punch and die have respective curved working surfaces with respective radiuses of curvature defined as a function of the radius of curvature of the bent portion to be made and the thickness of the sheet metal piece,

wherein the working surface of the punch has a radius of curvature substantially equal to the theoretical radius of curvature of the intrados surface of the bent portion to be obtained, and

wherein the working surface of the die has a radius of curvature greater than the theoretical radius of curvature of the extrados surface of the bent portion to be obtained, the radius of curvature of the working surface of the die being calculated from the theoretical radius of curvature of the extrados surface of the bent portion to be made taking into account a correction factor dependent on the tensile strength of the material of the sheet metal piece, the angle of the bent portion to be obtained and the thickness of the sheet metal piece.

By using a die having a working surface with a radius of curvature suitably increased relative to the theoretical one, it is possible to counteract the springback of the material after the bending operation, and therefore to control the bending angle with high precision, as well as reduce the stresses in the material during bending, thus ensuring the mechanical performance required of the component, reducing in particular the risk of crack initiation at the bends.

Preferably, as the correction factor on the basis of which the radius of curvature of the working surface of the die is corrected relative to the theoretical radius of curvature, the ratio between the area of the bent portion to be obtained between the neutral axis and the real extrados surface, i.e. the extrados surface that would actually be obtained by bending the piece of sheet metal with the desired angle and bending radius, and the area of the bent portion to be obtained between the neutral axis and the theoretical extrados surface is chosen. This correction factor is in the range of 4% to 16%.

The subject matter of this invention further includes a fork for a gearbox and a mounting bracket for injectors of internal combustion engines, as specified respectively in independent claim 5 and independent claim 6, as examples of metal components obtained by means of the method of the invention.

Brief description of the drawings

Further features and advantages of this invention will be clarified by the detailed description that follows, given purely by way of non-limiting example in reference to the accompanying drawings, wherein:

Fig. 1 is a perspective view of a fork for a gearbox according to the prior art;
Fig. 2 and 3 are respectively a perspective view and a front view of a fork for a gearbox with geometry similar to that of the fork of Fig. 1, obtainable with the method of this invention;
Fig. 4 and 5 are respectively a perspective view and a bottom view of a bracket for mounting injectors of internal combustion engines, obtainable with the method of this invention;
Fig. 6 schematically shows a bending operation in a method according to an embodiment of this invention; and
Fig. 7 and 8 schematically illustrate an exemplifying section of a bent sheet with dimensions for calculating the position of the center of curvature of the curved surface portion of the working surface of a die.

Detailed description

In the introductory part of this description, with reference to Fig. 2 and 3, a fork for a gearbox obtainable by applying the method according to the invention has already been illustrated.

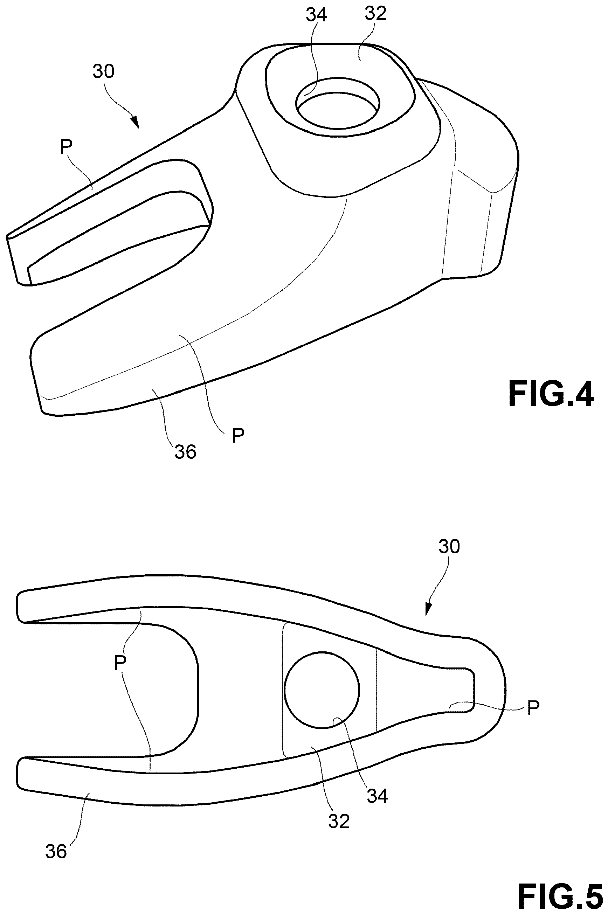

Fig. 4 and 5 show, as a further example of a component, in particular for a motor vehicle, obtainable with the method according to the invention from a single piece of sheet metal, a mounting bracket 30 for mounting injectors for internal combustion engines. With reference to these figures, the mounting bracket 30 substantially forms a central fixing portion 32, having a through hole 34 for the insertion of a fixing screw (not shown) for fixing the bracket 30 to the motor head, and a fork portion 36 extending from the central fixing portion 32 (or, alternatively, a pair of fork portions extending on opposite sides relative to the central fixing portion 32) for mounting a respective injector (known per se and not illustrated).

The mounting bracket 30 shown in Fig. 4 and 5 is obtained starting from a single piece of sheet metal suitably shaped by performing a series of bending operations. In these figures, P indicates the bends of the mounting bracket 30 made according to the method of this invention.

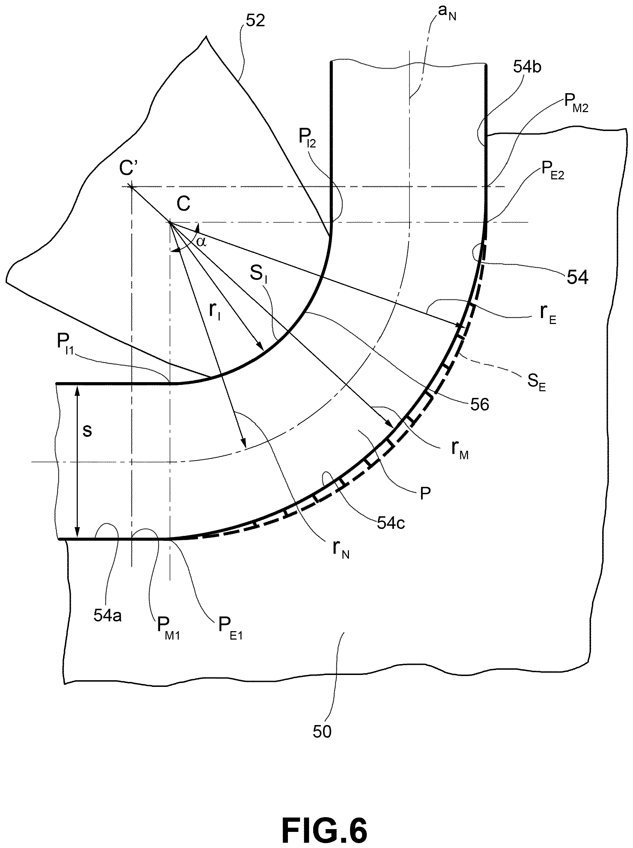

With reference to Fig. 6, the method for carrying out a bending operation according to this invention for obtaining, for example, one of the bends P of the fork 10 of Fig. 2 and 3 or of the mounting bracket 30 of Fig. 4 and 5 will now be described.

In Fig. 6, $S_I$ and $S_E$ respectively indicate the theoretical surfaces (i.e. as designed) of the intrados and extrados of the bend P. The theoretical surface of the intrados $S_I$ of the bend P extends between a point $P_{I1}$ and a point $P_{I2}$, while the theoretical surface of the extrados $S_E$ of the bend P extends between a point $P_{E1}$ and a point $P_{E2}$. The extrados surface $S_E$ is drawn in Fig. 6 with a dashed line. The neutral axis of the bend P is indicated with $a_N$, while the bending angle is indicated with $\alpha$. The radius of curvature of the theoretical surface of the intrados $S_I$ is indicated with $r_I$, while the radius of curvature of the theoretical surface of the extrados $S_E$ is indicated with $r_E$. Finally, s indicates the thickness of the sheet.

The bend P is obtained by plastically deforming the material of the sheet between a die 50 and a punch 52, having respective suitably shaped working surfaces (i.e. respective surfaces intended to come into contact with the material to be processed) 54 and 56.

With regard in particular to the die 50, the working surface 54 includes a first substantially flat surface portion 54a, a second substantially flat surface portion 54b, which is inclined with respect to the first surface portion 54a by an angle equal to the bending angle $\alpha$, and a curved surface portion 54c, which joins the two flat surface portions 54a and 54b to each other.

According to the invention, the curved surface portion 54c of the working surface 54 of the die 50 does not have a profile corresponding to that of the theoretical extrados surface $S_E$, but rather has a radius of curvature $r_M$ greater than the radius of curvature $r_E$ of the theoretical extrados surface $S_E$. In other words, the curved surface portion 54c of the working surface 54 of the die 50 used in the method according to the invention to obtain the bend P has a less pronounced curvature than a die having a curved working surface portion with a profile corresponding to that of the theoretical extrados surface $S_E$ of the bend P.

The reduction of the curvature involves a shortening of the extrados of the curved part of the sheet. It will be observed (Fig. 6) that the curved surface portion 54c of the working surface 54 of the die has a shorter length than the length of the theoretical extrados surface $S_E$. This shorter length reduces stretching and therefore the tensile stress in the radially outermost part of the bent or curved part of the sheet. It will be appreciated that by reducing the tensile stress the cause of springback and crack formation is reduced.

In Fig. 6, C indicates the center of the theoretical extrados surface $S_E$, having a radius of curvature $r_E$.

The radius of curvature $r_M$ of the curved surface portion 54c of the working surface 54 of the die 50 is calculated from the radius of curvature $r_E$ of the theoretical extrados surface $S_E$ of the bend P taking into account a correction factor k dependent on the tensile strength of the material, the bending angle $\alpha$ and the thickness s of the sheet.

In Fig. 6, C' indicates the center of curvature of the curved surface portion 54c of the working surface 54 of the die 50.

Preferably, the correction factor k is a reduction factor to be applied to the theoretical area of the stretched zone of the bend P, i.e. to the area of the bent zone P wherein the material is subjected to traction, therefore to the area comprised in the radial direction between the neutral axis $a_N$ and the theoretical extrados surface $S_E$ and in a circumferential direction between the radius $r_M$ passing through the point and $P_{M1}$ (beginning of the bend P) and the radius $r_M$ passing through the point $P_{M2}$ (end of the bend P). In other words, the curved surface portion 54c of the die 50 corresponds to the extrados surface of the corrected bend of the aforementioned correction factor k, i.e. the extrados surface of a bend wherein the area of the stretched zone is reduced by this correction factor relative to the theoretical area of the stretched zone. In this case, the correction factor k is in the range of 4% to 16%.

An example of calculation of the radius of curvature $r_M$ of the curved surface portion 54c of the die 50 will now be described, assuming a bend P with a bending angle $\alpha$ equal to 90° (although the invention is equally applicable to different bending angles, in any case around 90°, and precisely between 80° and 100°), a radius of curvature $r_I$ of the theoretical intrados surface $S_I$ equal to 5 mm and a radius of curvature $r_E$ of the theoretical extrados surface $S_E$ equal to 10 mm on a piece of aluminum sheet with thickness s equal to 5 mm, in which case the correction factor k will be equal to 12.48%. Considering that the neutral axis $a_N$ is positioned at 5/12 of the thickness s of the material, whereby the curved portion of the neutral axis at the bend P has a radius of curvature $r_N$ equal to 7.08 mm, the theoretical area of the stretched zone of the bend P will be equal to 39.17 mm$^2$. Applying the correction factor k indicated above, the corrected area will be equal to 34.28 mm$^2$. Using a criterion of proportionality between the area of the stretched zone and the length of the extrados surface between the points $P_{E1}$ and $P_{E2}$ (which for the theoretical extrados surface $S_E$ is equal to 15.71 mm), the length of the curved surface 54c of the working surface 54 of the die 50 will be equal to (39.17 x 15.71)/34.28 mm = 17.92 mm. This length corresponds to a radius of curvature $r_M$ equal to 11.4 mm. The profile of the curved surface portion 54c of the working surface 54 of the die 50 is thus defined, which will be an arc passing through the points $P_{M1}$ and $P_{M2}$ and having the radius of curvature $r_M$ calculated above.

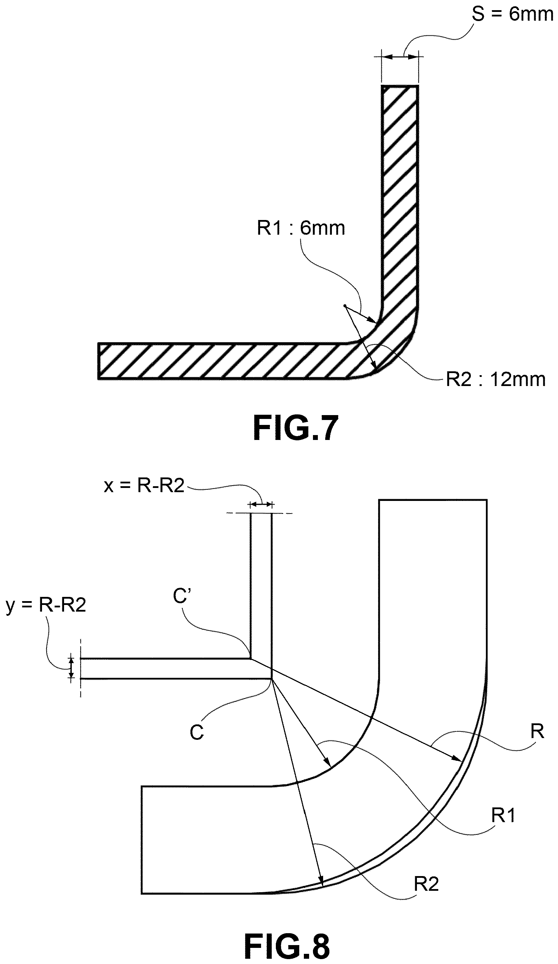

With reference to Fig. 7 and 8, some further examples are provided for calculating the radius of curvature of the curved working surface of the die.

Having defined:

s = thickness of the material;
R1 = radius of the punch surface;
R2 = R1 + s = theoretical outer extrados radius of the bent portion to be obtained;
R = real radius of the die, or radius of curvature of the curved working surface of the die. 1.57 = constant factor
f = 0.45 correction factor for Al and Cu materials
f = 0.35 correction factor for steel with mechanical tensile strength lower than 37 daN/mm$^2$ f = 0.30 correction factor for steel with mechanical tensile strength greater than 37 daN/mm$^2$

For Al or Cu sheets:

$$R = \frac{R2 \text{ x } 1.57 + 0.45 \text{ x } s}{1.57}$$

For steel sheets with mechanical tensile strength lower than 37 daN/mm$^2$:

$$R = \frac{R2 \text{ x } 1.57 + 0.35 \text{ x } s}{1.57}$$

For steel sheets with mechanical tensile strength greater than 37 daN/mm$^2$:

$$R = \frac{R2 \text{ x } 1.57 + 0.30 \text{ x } s}{1.57}$$

In the last example above, s = 6 mm; R1 = 6 mm; R2 = 12 mm

$$R = \frac{12 \text{ x } 1.57 + 0.30 \text{ x } 6}{1.57} = 13.146$$

The center C' (Fig. 8) of the center of curvature of the curved surface portion of the working surface of the die must be moved by a distance (R - R2) on the x and y axes relative to the center C of the theoretical extrados surface, having a radius of curvature R2. Therefore, with R = 13.146 mm:

$$x = R - R2 = 13.146 - 12 = 1.146 \text{ mm}$$

$$y = R - R2 = 13.146 - 12 = 1.146 \text{ mm}$$

Without prejudice to the principle of the invention, the embodiments and the details of construction may be widely varied with respect to that which has been described and illustrated purely by way of non-limiting example, without thereby departing from the scope of the invention as defined by the appended claims.

## Claims

1. A method for manufacturing metal parts (10, 30), in particular parts for motor vehicles, such as forks (10) for gearboxes and mounting brackets (30) for the mounting of injectors of internal combustion engines, from a single sheet metal piece,
   the method comprising at least one bending step wherein said sheet metal piece is bent for obtaining a bent portion (P) of the component with a bending angle ($\alpha$) between 80° and 100°,
   wherein said at least one bending operation is carried out by urging the sheet metal piece with a punch (52) against a die (50), wherein the punch (52) and the die (50) having respective curved working surfaces (54, 56) with respective radiuses of curvature ($r_M$) defined as a function of the radius of curvature of the bent portion (P) to be obtained and on the thickness (s) of the sheet metal piece,
   wherein the working surface (56) of the punch (52) has a radius of curvature substantially equal to the radius of curvature (ri) of the theoretical intrados surface (SI) of the bent portion (P) to be obtained, and
   wherein the working surface (52) of the die (50) has a radius of curvature (rM) smaller than the radius of curvature (rE) of the desired extrados surface (SE) of the bent portion (P) to be obtained, the radius of curvature (rM) of the working surface (54, 54c) of the die (50) being calculated from the radius of curvature (rE) of the theoretical extrados surface (SE) of the bent portion (P) to be obtained using a correction factor (k) depending on the tensile strength of the material of the sheet metal piece, on the bending angle ($\alpha$) of the bent portion (P) to be obtained and on the thickness (s) of the sheet metal piece.

2. Method according to claim 1, wherein the correction factor (k) is calculated as the ratio of the area of the bent portion (P) to be obtained comprised between the neutral axis (aN) and the actual extrados surface, i.e. the extrados surface that would actually be obtained by bending the sheet metal piece with the desired bending angle ($\alpha$) and radius of curvature, and the area of the bent portion (P) to be obtained comprised between the neutral axis (aN) and the theoretical extrados surface (SE).

3. Method according to claim 2, wherein said correction factor (k) is comprised between 4% and 16%.

4. Method according to any one of the preceding claims, wherein the bending angle ($\alpha$) is equal to 90°.

5. Fork (10) for a gearbox, comprising a body (14) adapted to slidably support the fork (10) along a guide rod of the gearbox, a pair of prongs (16) formed in one piece with the body (14) and an actuation nose (18) formed in one piece with the body (14), the fork (10) being obtained from a single sheet metal piece by a method according to any one of the preceding claims.

6. Mounting bracket (30) for the mounting of injectors of internal combustion engines, comprising a central fixing portion (32) for fixing the mounting bracket (30) onto the head of the engine and at least one fork-like portion (36) extending from the fixing portion (32) for the mounting of a respective injector, the mounting bracket (30) being obtained from a single sheet metal piece by a method according to any one of claims 1 to 4.

# FIG.1
(PRIOR ART)

**FIG.2**

**FIG.3**

30

34  32

P

P

36

**FIG.4**

30

P

P

34

32

36

**FIG.5**

**FIG.6**

S = 6mm

R1 : 6mm

R2 : 12mm

## FIG.7

x = R-R2

y = R-R2

C'

C

R

R1

R2

## FIG.8

Europäisches
Patentamt

European
Patent Office

Office européen
des brevets

# EUROPEAN SEARCH REPORT

Application Number

EP 20 20 0802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 083255 A (AMADA CO LTD) 5 April 2007 (2007-04-05) * figures * | 1-4 | INV. F16H63/32 B21D5/01 F02M61/14 |
| X | JP 2004 268044 A (AMADA CO LTD) 30 September 2004 (2004-09-30) * figures * | 1-4 | |
| X | JP 2003 083448 A (SUZUKI MOTOR CO; KOORITSU KK; HAYASHI KOGYO KK) 19 March 2003 (2003-03-19) * figures * | 5 | |
| X | JP H11 101170 A (KUBOTA KK) 13 April 1999 (1999-04-13) * figures * | 6 | |
| A | US 2020/292429 A1 (FUJII YUSUKE [JP] ET AL) 17 September 2020 (2020-09-17) * the whole document * | 1-4 | |
| A | US 4 294 095 A (KAWANO TSUYOSHI ET AL) 13 October 1981 (1981-10-13) * figures 4-9 * | 1-4 | TECHNICAL FIELDS SEARCHED (IPC)<br><br>F16H F02M B21D |

The present search report has been drawn up for all claims

| Place of search | Date of completion of the search | Examiner |
|---|---|---|
| Munich | 16 February 2021 | Meritano, Luciano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## EP 3 982 013 A1

### ANNEX TO THE EUROPEAN SEARCH REPORT
### ON EUROPEAN PATENT APPLICATION NO.

EP 20 20 0802

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2021

| Patent document cited in search report | | Publication date | Patent family member(s) | | Publication date |
|---|---|---|---|---|---|
| JP 2007083255 | A | 05-04-2007 | JP | 4856919 B2 | 18-01-2012 |
| | | | JP | 2007083255 A | 05-04-2007 |
| JP 2004268044 | A | 30-09-2004 | JP | 4697922 B2 | 08-06-2011 |
| | | | JP | 2004268044 A | 30-09-2004 |
| JP 2003083448 | A | 19-03-2003 | JP | 4232072 B2 | 04-03-2009 |
| | | | JP | 2003083448 A | 19-03-2003 |
| JP H11101170 | A | 13-04-1999 | JP | 3357584 B2 | 16-12-2002 |
| | | | JP | H11101170 A | 13-04-1999 |
| US 2020292429 | A1 | 17-09-2020 | CN | 110997172 A | 10-04-2020 |
| | | | EP | 3674009 A1 | 01-07-2020 |
| | | | JP | 6558515 B2 | 14-08-2019 |
| | | | JP | WO2019039134 A1 | 07-11-2019 |
| | | | KR | 20200033910 A | 30-03-2020 |
| | | | US | 2020292429 A1 | 17-09-2020 |
| | | | WO | 2019039134 A1 | 28-02-2019 |
| US 4294095 | A | 13-10-1981 | NONE | | |

For more details about this annex : see Official Journal of the European Patent Office, No. 12/82

**EP 3 982 013 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2053283 B1